# EUROPÄISCHE PATENTSCHRIFT

(11) **EP 1 163 709 B1**
(45) Veröffentlichungstag und Bekanntmachung des Hinweises auf die Patenterteilung: **23.04.2003**
(21) Anmeldenummer: 00910555.2
(22) Anmeldetag: 28.02.2000
(51) Int. Cl.: H01S 3/06, H01S 3/083

(54) **MONTAGEVERFAHREN ZUM AUFBAU EINES MISER-LASERS MIT FASERANKOPPLUNG**
METHOD FOR ASSEMBLING A MISER LASER WITH FIBRE COUPLING
PROCEDE DE MONTAGE PERMETTANT DE RACCORDER UNE FIBRE A UN LASER MISER

(30) Priorität: 27.02.1999 DE 19908599
(43) Veröffentlichungstag der Anmeldung: 19.12.2001
(73) Patentinhaber: ROBERT BOSCH GMBH, 70442 Stuttgart (DE)
(72) Erfinder: BARTELT-BERGER, Lars, D-71570 Oppenweiler (DE); KUKE, Albrecht, D-71549 Auenwald (DE); FRITSCHER, Raimund, D-71576 Burgstetten (DE); REPPE, Helmut, D-70771 Leinfelden-Echterdingen (DE); SCHOLZ, Werner, D-71554 Weissach (DE); SOMMERFELDT, Ralph, D-71522 Backnang (DE)
(86) Internationale Anmeldenummer: DE0000551
(87) Internationale Veröffentlichungsnummer: WO00052790

(56) Entgegenhaltungen:
- EP-A- 0 291 145
- US-A- 4 749 842
- US-A- 5 027 367
- KANE T J ET AL: "MONOLITHIC, UNIDIRECTIONAL SINGLE-MODE ND:YAG RING LASER" OPTICS LETTERS,US,OPTICAL SOCIETY OF AMERICA, WASHINGTON, Bd. 10, Nr. 2, 1. Februar 1985 (1985-02-01), Seiten 65-67, XP000567906 ISSN: 0146-9592 in der Anmeldung erwähnt

## Beschreibung

### Stand der Technik

Die Erfindung betrifft ein Montageverfahren zum Aufbau eines Miser-Lasers mit Faserankopplung. Ein solcher Miser wird beispielsweise für die optische Nachrichtentechnik mit kohärenter Übertragung benötigt, da hierfür eine extrem schmalbandige und phasenstabile Signallichtquelle erforderlich ist. Zur Modulation des Lichtes werden nach dem Stand der Technik optische Modulatoren mit transversal einmodigen und polarisationsabhängigen Lichtwellenleitern eingesetzt. Daher muss das vom Miser erzeugte Licht in eine polarisationserhaltende Einmodenfaser gekoppelt werden. Bei einer Freistrahlübertragung zwischen Satelliten kann überdies noch eine optische Verstärkung des modulierten Signals in einem einmodigen Faserverstärker erforderlich werden.

Die Funktionsweise eines Miser (MISER = Monolithic Isolated Single-mode End-pumped Ringresonator) wurde beispielsweise in den Veröffentlichungen von Thomas J. Kane und Robert L. Byer "Monolithic, unidirectional single-mode Nd:YAG ring laser", Optics Letters, Vol. 10, No. 2, 65 (1985) und Thomas J. Kane, Emily A. P. Cheng, "Fast frequency tuning and phase locking of diode-pumped Nd:YAG ring lasers", Optics Letters, Vol. 13 No. 11, 970 (1988) beschrieben. Im Unterschied zu einem Laser mit stabförmigen Laserkristall und zwei Endspiegeln wird bei einem Ringlaser das Licht über mehrere Umlenkspiegel auf einem ringförmigen Lichtweg geführt. Dabei sind noch beide Umlaufsinne für das Licht möglich.

Bei einem Miser-Laser wird das Licht innerhalb eines monolithischen Laserkristalls auf einem nichtplanaren ringförmig geschlossenen Lichtweg geführt. Die Lichtführung geschieht durch mehrere Totalreflexionen an den Kristallflächen und durch eine Teilreflexion an einer Lichtaus- und -eintrittsfläche, die für das Laserlicht eine hohe Reflektivität aufweist. Durch die gleiche teilreflektierende Fläche, aus der das Laserlicht austritt, wird das Pumplicht longitudinal, d. h. in Strahlrichtung des Laserlichtes, eingekoppelt. Dementsprechend muss diese Fläche dichroitisch beschichtet sein und für das Pumplicht eine geringe und für das Laserlicht eine hohe Reflektivität haben.

Durch die monolithische Integration aller Umlenkspiegel als Begrenzungsflächen eines einzigen Kristalls erhält man im Vergleich zu Anordnungen mit separat aufgebauten Spiegeln eine wesentlich robustere Strahlführung. Ein Miser-Laser zeichnet sich durch einen longitudinal und transversal einmodigen Laseraustrittstrahl aus. Um eine stabile longitudinale Einmodigkeit zu erreichen, müssen stehende Wellen im Verstärkungsbereich des Lasers vermieden werden, da wegen des sogenannten spatial-holeburning-Effektes im Bereich der Schwingungsbäuche einer stehenden Welle die Inversion dort bevorzugt abgebaut wird. Im mittleren Bereich des Resonators hat aber an diesen Stellen die nächst höhere oder niedrigere longitudinale Mode eines Lasers ihre Knoten, so dass deren Anregung bevorzugt wird, was zu einem unkontrollierten Springen zwischen benachbarten longitudinalen Moden und damit zu einer Frequenzinstabilität führt.

Um stehende Wellen im Verstärkungsbereich des Lasers zu vermeiden, muss bei einem ringförmigen Lichtweg ein Umlaufsinn unterdrückt werden. Beim Miser geschieht dies durch eine Überlagerung einer reversiblen und einer irreversiblen Drehung der Polaristionsebene des Lichtes. Die reversible Drehung der Polarisationsebene erfolgt beim Miser dadurch, dass der Lichtweg nicht in einer Ebene geführt wird. Dabei trifft das Licht auf mindestens drei reflektierende Fläche, deren Normalenrichtungen nicht in einer Ebene liegen. Dies führt zu einer Drehung der Polarisationsrichtung des Lichtes bezüglich der Lichtausbreitungsrichtung, die für beide der ringförmig geführten Lichtwege entsprechend ihrem Umlaufsinn eine entgegengesetzte Richtung hat.

Zur Erzeugung der überlagerten irreversiblen Drehung der Polarisationsrichtung wird für den Miser-Laser ein Material mit Faradayeffekt, wie z. B. ein Nd-dotierter YAG-Kristall, verwendet. Dazu wird parallel zur Längsachse des YAG-Kristalls ein Magnetfeld angelegt.

Die Überlagerung beider Effekte zur reversiblen und irreversiblen Polarisationdrehung führt dazu, dass sich für die eine Umlaufrichtung des Lichtes die beiden Dreheffekte verstärken und für die andere Umlaufrichtung abschwächen. Beim Auftreffen auf die Lichtaustrittsfläche trifft daher das Licht der einen Umlaufrichtung bei geeigneter Stärke des Magnetfeldes nahezu senkrecht und in der anderen Umlaufrichtung nahezu parallel zur Einfallsebene polarisiert auf. Daraus ergibt sich ein unterschiedliches Reflexions- und Transmissionsverhalten für beide Umlaufrichtungen und dadurch bedingt eine unterschiedliche Dämpfung. Dies führt dazu, dass nur die Lichtwelle mit Umlaufsinn in der Richtung mit der geringeren Dämpfung den Laserbetrieb erreicht. Dadurch werden stehende Wellen vermieden und ein longitudinaler Einmodenbetrieb ermöglicht.

Die transversale Einmodigkeit wird durch eine longitudinale Pumplichtanregung über die Lichteintrittsfläche erreicht, wobei der Pumplichtstrahl in seinem Querschnitt so begrenzt wird, dass im Wesentlichen nur das Volumen der transversalen Grundmode angeregt wird. Die Abstimmung der Frequenz des Laserlichtes kann durch eine Temperierung des Laserkristalls mit einer größeren Zeitkonstante und einem größeren Frequenzhub und zusätzlich durch eine mechanische Verspannung über ein aufgeklebtes Piezoelement mit einer kleineren Zeitkonstante im Millisekundenbereich und einem kleineren Frequenzhub erfolgen.

In der US-Patentschrift 4,749,842 vom 7. Juni 1988 wird ein Montage- und Aufbaukonzept für einen Miser vorgestellt, wobei die Lichtquelle für das Pumplicht im gleichen Gehäuse integriert ist, wie der Miserkristall. Der Laserstrahl aus dem Miser tritt als kollimierter Strahl aus einem Fenster in der Gehäusewand aus.

Für die oben beschriebenen Anwendung einer kohärenten optischen Nachrichtenübertragung ist eine stabile Einkopplung des Lichtes in eine polarisationserhaltende Einmodenfaser erforderlich. Hier ergibt sich die Schwierigkeit, dass sowohl der Strahlengang für das Pumplicht als auch der Strahlengang für die Einkopplung des Laserlichtes in die polarisationserhaltende Einmodenfaser mit hoher Genauigkeit zum Laserkristall ausgerichtet sein müssen. Ein weitere Schwierigkeit erwächst daraus, dass Rückreflexionen vom Ausgangsstrahl zurück in den Laserkristall vermieden werden müssen, um die Frequenzstabilität des Misers nicht zu gefährden. In der vorbekannten Lösung wird der Laserkristall in mehreren Freiheitsgraden zum einfallenden Pumplichtstrahl justiert und durch Lötung fixiert. Bei dieser Justage muss der ideale Pumplichteinkoppelort auf der Lichtein- und Lichtaustrittsfläche auf der Laserstirnseite innerhalb eines kleinen Bereiches von einigen zehn Mikrometern Durchmesser unter dem richtigen Winkel getroffen werden, da nur von diesem Einkoppelort aus ein in sich geschlossener Lichtweg möglich ist und ein Laserstrahl angeregt werden kann. Nach dem oben zitierten Stand der Technik wird der Laserkristall zum fokussierten Pumplichtstrahl in drei Translationskoordinaten und in zwei Winkelkoordinaten solange justiert, bis ein Laserstrahl mit optimaler Leistung aus dem Kristall austritt. Die Richtung und Lage des austretenden Laserstrahls hängt von der Position des Laserkristalls nach der Justage ab und ist daher unbestimmt. Infolge von Toleranzen in den Dimensionen und Schliffwinkeln des Kristalls kann hieraus eine erhebliche Unsicherheit in der Richtung und Lage des Laserstrahls auftreten.

Um den Laserstrahl auf eine polarisationserhaltende Einmodenfaser für Anwendungen zur kohärenten Übertragungstechnik zu fokussieren, ist eine Fokussierungslinse erforderlich, die in dem Strahlengang positioniert werden muss. Diese Linse kann nicht unmittelbar am Austrittsfenster des Laserkristalls angebracht werden, da zur Einstellung des Polarisationszustandes zwischen Laserkristall und Fokussierungslinse noch optische Verzögerungsplatten erforderlich sind. Bei einem Justage- und Aufbaukonzept nach dem Stand der Technik wäre eine Ankopplung einer Einmodenfaser sehr problematisch, da der Justagevorgang am Laserausgang vom Justagevorgang am Pumplichteingang und der dadurch bedingten Unsicherheit in der Lage des Laserstrahls abhängt.

### Vorteile der Erfindung

In der vorliegenden Erfindung wird ein Aufbau- und Justagekonzept vorgeschlagen, welches die oben beschriebenen Nachteile vermeidet und eine stabile und rückreflexionsarme Einkopplung des Pumplichteingangs und des Laserausgangs in eine polarisationserhaltende Einmodenfaser erlaubt, wobei die Justageprozesse am Pumplichteingang und am Laserausgang voneinander unabhängig sind.

Vorteilhafte Weiterbildungen sind in den abhängigen Ansprüchen angegeben, deren Merkmale auch, soweit sinnvoll, miteinander kombiniert werden können.

### Zeichnung

Ein Ausführungsbeispiel der Erfindung ist in der Zeichnung dargestellt und im Folgenden näher erläutert. Schematisch ist gezeigt in
- Figur 1:: ein Miser-Laser zunächst noch ohne Ankopplungsoptik für den Ein- und Ausgang in Aufsicht,
- Figur 2:: einen Schnitt AA', betrachtet von der Seite des Pumplichteintritts,
- Figur 3:: einen Schnitt BB', betrachtet von der Seite des Laserlichtausgangs,
- Figur 4:: ein Miserkristall zur Erläuterung möglicher Strahlenverläufe,
- Figur 5:: eine Anordnung zur Erläuterung einer Justagestrategie für einen Miserstapel,
- Figur 6:: ein bei der Justage auftretendes Reflexbild,
- Figur 7:: eine Anordnung zur Erläuterung der Justage einer Ferrule für das Pumplicht eines Misers
- Figur 8:: eine Anordnung zur Erläuterung der vertikalen Justage einer Ferrule für das Ausgangslicht eines Misers.

Im Wesentlichen gleiche Teile in unterschiedlichen Figuren sind mit gleichen Bezugszeichen versehen.

### Beschreibung des Ausführungsbeispiels

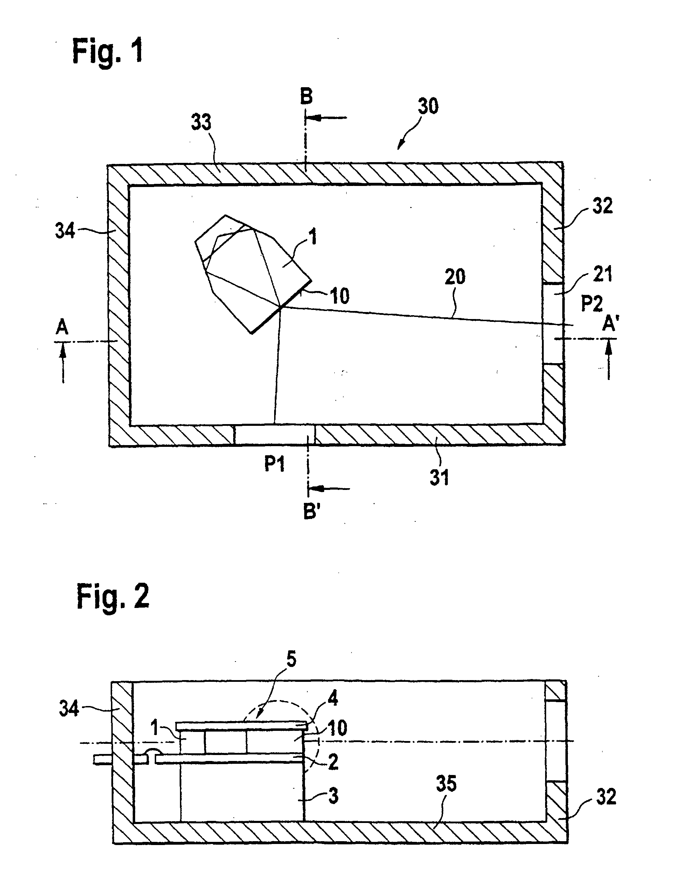

Ein Miserkristall 1 sitzt auf einem temperaturgeregelten Heizelement 2 und einem Temperaturisolationsblock 3. Die Temperaturregelung des Miserkristalls wird zur Abstimmung der Lichtwellenlänge des Misers verwendet. Zur Feinabstimmung der Lichtwellenlänge mit hoher Regelgeschwindigkeit dient ein auf der Oberseite des Miserkristalls befestigtes Piezoelement 4. Dieses Piezoelement 4 ist wegen der Übersichtlichkeit in der Aufsicht in Fig. 1 weggelassen worden. Zwei Permanentmagnete (hier nicht gezeichnet), die vorzugsweise im Deckel eines Gehäuses 30 angebracht sind und bis dicht über den Miserkristall ragen, erzeugen das für den Faradayeffekt im Miserkristall erforderliche statische Magnetfeld. Der ganze Miserstapel 5, der aus den Teilen 1 bis 4 besteht, wird zunächst montiert und die einzelnen Teile untereinander durch Kleben oder Löten befestigt. Ziel der Erfindung ist es nun, diesen Miserstapel 5 innerhalb des Gehäuses 30 mit den Seitenflächen 31 bis 34 und dem Gehäuseboden 35 zu justieren und auf dem Gehäuseboden 35 zu fixieren. Diese Justage des Miserstapels hat den Zweck, die Richtung und Lage des im Port P1 eintretenden Pumpstrahls und des aus dem Port P2 austretenden Miserstrahls vorzubestimmen. Entsprechend einem Merkmal der Erfindung wird für die Justage des Miserstrahls von außen durch das Port P2 hindurch ein Referenzstrahl 20 gerichtet. Dieser Referenzstrahl 20 hat ungefähr die gleiche Wellenlänge, die gleiche Lage und die gleiche räumliche Winkelausrichtung jedoch mit umgekehrter Lichtstrahlrichtung, die der im Miserkristall zu erzeugende Miserstrahl später haben soll.

Zur Vermeidung von Rückreflexionen müssen die anzukoppelnden Fasern schräge Stirnflächen haben. In der optischen Nachrichtentechnik ist für Einmodenfasern ein Winkel zwischen der Normalen der Faserstirnfläche und der Faserachse von 8° gebräuchlich. Nach dem Brechungsgesetz wird dann der austretende Strahl gegenüber der Faserachse um 3,7° gebrochen. Zur Vereinfachung der Montage ist es vorteilhaft, wenn die Faserachse einer anzukoppelnden Ausgangsfaser in Richtung der Flächennormalen auf der Seitenfläche 32 des Gehäuses verläuft. Dann muss der Miseraustrittstrahl gegenüber der Flächennormalen der Seitenfläche 32 einen Winkel von 3,7° einschließen. Daher wird der Referenzstrahl 20 so ausgerichtet, dass er parallel zur Grundfläche 35 des Gehäuses 30 verläuft und mit der Flächennormalen der Seitenfläche 32 einen Winkel von 3,7° einschließt.

In das erste Gehäusefenster 21 am Ausgangsport P2 wird später zur Fokussierung des Miseraustrittstrahls auf die Stirnfläche der Ausgangsfaser eine Linse eingesetzt. Da diese Linse vom später zu erzeugenden Miserstrahl möglichst nahe ihrer Mitte getroffen werden muss, wird der Referenzstrahl in seiner Position so ausgerichtet, dass er die Mitte des Gehäusefensters 21 am Port P2 durchläuft. Zur Erzeugung des Referenzstrahls 20 kann beispielsweise ein Kollimator verwendet werden, der aus einer Einmodenfaser besteht, welche die gleiche Abschrägung der Faserstirnfläche hat wie die später anzukoppelnde Ausgangsfaser; zusätzlich kann eine auf diese Faser justierte Kollimierungslinse verwendet werden, die in einem Flansch sitzt, der passgenau in das Gehäusefenster 21 gesteckt werden kann und dort in azimutaler Richtung so orientiert wird, dass der kollimierte Referenzstrahl parallel zur Grundfläche 35 des Gehäuses 30 verläuft. Ebenso wäre auch jede andere Erzeugung des Referenzstrahls 20 möglich wie beispielsweise mit einem Nd:YAG-Laser, der in einer gemeinsamen Aufnahme zusammen mit dem Misergehäuse 30 befestigt ist.

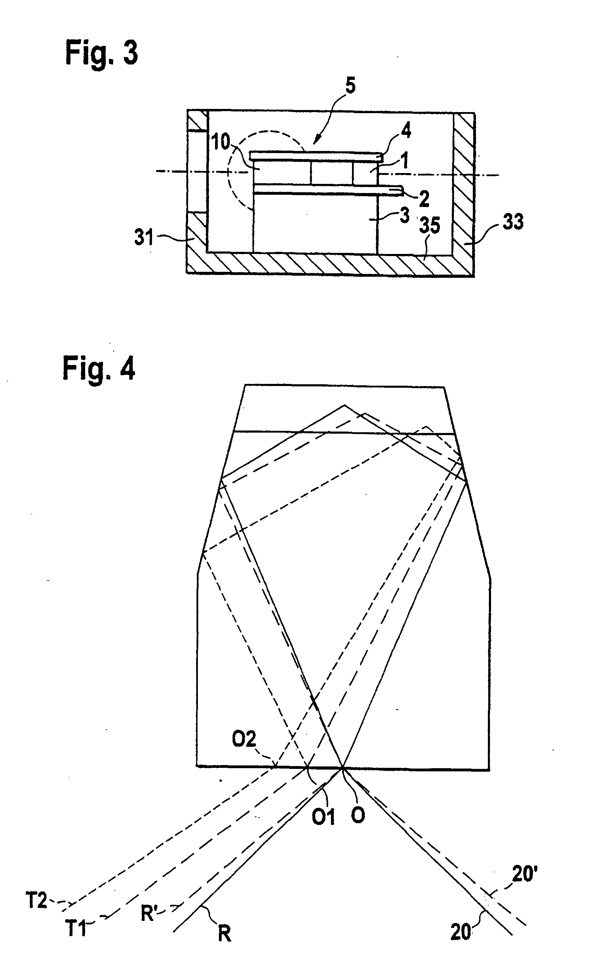

Bei einem Miser müssen im Innern des Miserkristalls der Pumplichtstrahl und der Miserstrahl kollinear oder antikollinear geführt werden. Ist dies nicht der Fall, so wird entweder kein Miserlicht angeregt oder das Miserlicht ist nicht transversal einmodig oder nicht in optimaler Leistungsanregung. Typischerweise werden Miserkristalle so geschliffen, dass der Pumplichtstrahl und der Miserstrahl einen Winkel von ungefähr 90° zueinander einschließen, wenn sie über die Lichtein- und Lichtaustrittfläche an der Kristallstirnseite 10 ein- bzw. austreten. Die Einfallsebene der ein- und austretenden Strahlen liegt näherungsweise parallel zur Kristallgrundfläche und geht etwa durch die Mitte der Kristallstirnfläche 10. Infolge von Toleranzen beim Schleifen und Polieren der lichtreflektierenden Flächen des Miserkristalls kann es Abweichungen in den Strahlrichtungen, in der Lage der Einfallsebene und in der Position des optimalen Einkoppelpunktes O (Figur 4) zur Einkopplung des Pumplichtes in den Kristall geben. Dieser optimale Einkoppelpunkt kann einige zehn Mikrometer von der Flächenmitte der Kristallstirnfläche entfernt sein, und die Winkelfehler können im Bereich um bis zu 2° liegen. Das erfindungsgemäße Montageverfahren des Miserstapels liefert die Möglichkeit, trotz dieser Kristalltoleranzen auf einfache Weise voneinander unabhängige Justagen in beiden Ports P1 und P2 durchzuführen.

Anhand der Figur 4 wird das im Rahmen des erfindungsgemäßen Montageverfahrens erforderliche Justageverfahren für den Miserstapel erläutert. Hier ist der Strahlengang des Referenzstrahls 20 außerhalb und innerhalb des Miserkristalls eingezeichnet (durchgezogener Lichtweg für optimale Strahlausrichtung). Dem Justageverfahren für den Miserstapel liegt die Erkenntnis zugrunde, dass bei optimaler Ankopplung des Pumpstrahls dessen Lichtweg im Innern des Miserkristalls kollinear mit dem Lichtweg des Miserstrahls verlaufen muss. Damit der Lasereffekt ermöglicht werden kann, muss der Miserstrahl auf einem in sich geschlossenen Ringweg innerhalb des Kristalls verlaufen. Daraus folgt, dass bei allen Umläufen des Miserlichtstrahls bzw. des Referenzlichtstrahls 20 bei optimaler Ausrichtung des Miserkristalls der gleiche Punkt O auf der Kristallstirnfläche 10 unter dem gleichen Einfallswinkel getroffen werden muss. Da die Stirnfläche 10 teilverspiegelt ist, tritt bei jedem Umlauf des Miserlichtstrahls im Kristall an diesem Punkt ein Teil des Lichtes aus der Stirnfläche des Kristalls aus und der Rest wird reflektiert und verbleibt für weitere Umläufe im Kristall.

Richtet man auf diesen Punkt O auf der Stirnfläche 10 den Referenzstrahl 20 unter dem Richtungswinkel, mit dem der Miserstrahl austreten würde, wenn er optimal angeregt wäre, so wird der Referenzstrahl 20 im Miserkristall auf einem geschlossenen ringförmigen Lichtweg in entgegengesetztem Umlaufsinn wie der zur erzeugende Miserstrahl geführt, wobei ein Bruchteil des Referenzstrahls 20 bei jedem Umlauf beim Auftreffen auf die Stirnfläche 10 in der Richtung austritt, aus der ein Pumplichtstrahl bei optimaler Einkopplung eintreten müßte. In diese Richtung wird auch der Anteil des Referenzstrahls 20 reflektiert, der beim Auftreffen auf die Stirnfläche 10 im Punkt O nicht in den Kristall eintritt.

Trifft der Referenzstrahl nicht genau in den optimalen Auftreffpunkt O, sondern etwas daneben ein (laterale Dejustierung) oder kommt er - wie in Fig. 4 als gestrichelte Linie 20' eingezeichnet (Winkeldejustierung) - nicht aus der idealen Richtung oder treten sowohl laterale Dejustierung als auch Winkeldejustierung auf, so ergibt sich für den in den Miserkristall eintretenden Lichtanteil des Referenzstrahls kein geschlossener ringförmiger Lichtweg im Innern des Miserkristalls. Dies führt dazu, dass bei jedem Lichtumlauf nicht der Punkt O in der Stirnfläche 10 getroffen wird, sondern jeweils verschiedene Punkte O1, O2, O3, ... .

Bei jedem Auftreffen auf diese Punkte tritt ein Anteil des umlaufenden Referenzstrahls als Teilstrahlen T1, T2, T3, ... aus der Stirnfläche aus. Diese verschiedenen n Teilstrahlen unterscheiden sich nicht nur in ihrem Austrittspunkten O1, ..., On sondern auch in ihrer Strahlrichtung. Alle diese Strahlrichtungen der aus dem Miserkristall austretenden Teilstrahlen weichen auch von dem an der Stirnfläche 10 im Auftreffpunkt O reflektierten Referenzstrahl R in Strahlrichtung und Strahlausgangspunkt ab.

Fängt man auf einem Schirm oder in einer Kamera ohne Objektiv die Teilstrahlen T1 bis Tn und den reflektierten Referenzstrahl auf, so sieht man bei Fehljustierung des Miserkristalls in Bezug auf den einfallenden Referenzstrahl 20 einen hellen Fleck als Abbild des reflektierten Referenzstrahls R und zwei bis drei schwächere Abbilder der Teilstrahlen T1, T2 und T3 aus den ersten Umläufen des Referenzstrahls im Kristallinnern. Durch laterale Bewegung des Kristalls und durch Rotation um eine vertikale Achse lassen sich die verschiedenen Reflexe zu einem einzigen Reflex zusammenbringen. Für eine optimale Justierung des Miserkristalls zum einfallenden Referenzstrahl müssen der reflektierte Referenzstrahl R und alle den Kristall durchlaufenden Teilstrahlen T1, ..., Tn kollinear sein.

Das Zusammenfallen dieser Strahlen in einem einzigen Punkt auf einem Beobachtungsschirm bzw. auf einem Empfangschip einer Kamera ist aber noch keine hinreichende Bedingung für die erforderliche Kollinearität, da die Strahlen auch aus verschiedenen Punkten O1, ..., On in der Kristallstirnfläche 10 austreten können und bis zum Erreichen des Schirms oder der Kamera zusammenlaufen können. Um die erforderliche Kollinearität der Strahlen R und T1, ..., Tn nachzuweisen, müssen diese Strahlen jeweils in zwei hintereinander liegenden Ebenen zusammenfallen. Dies läßt sich entweder durch eine axiale Verschiebung des Schirms oder der Kamera in Strahlrichtung oder durch eine Blende in der Nähe der Kristallaustrittsfläche und eine Kamera bzw. einen Schirm in größerem Abstand nachweisen.

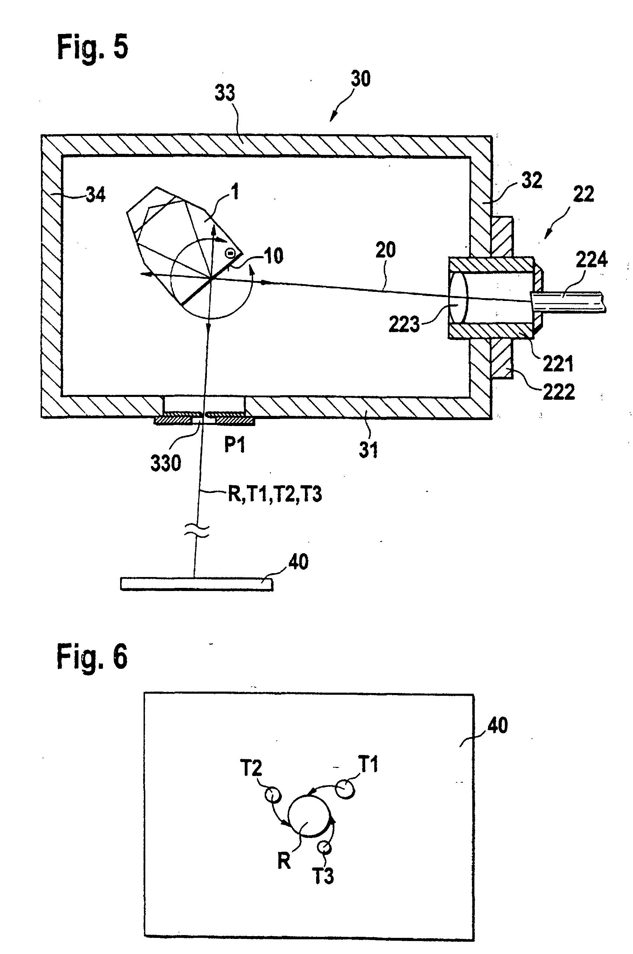

Auf eine bevorzugte Strategie für die Justage des Miserstapels bezieht sich Figur 5. In das Gehäusefenster 21 eines Ports P2 (vergleiche Figur 1) ist ein Kollimator 22 gesteckt, um den Referenzstrahl 20 zu erzeugen. Dieser Kollimator 22 besteht aus einem Gehäuse 221, mit dem er passgenau in dem Gehäusefenster 21 gehalten wird, und aus einem Flanschteil 222, das auf der Außenseite der Wand 32 aufliegt, um eine genaue Winkelausrichtung des Kollimators 22 zum Misergehäuse 30 zu gewährleisten. Der Kollimator enthält eine Linse 223 und eine Faserferrule 224 mit einer um 8° schräg polierten Stirnfläche, die in der Brennebene der Linse 223 liegt. Die Ferrulenachse ist in Richtung der Flächennormalen der Wand 32 ausgerichtet. Infolge der Lichtbrechung an der schrägen Stirnfläche der Faserferrule tritt das Lichtbündel unter einem Winkel von 3,7° gegen die Flächennormale der Wand 32 aus. Die Ferrule 224 ist gegenüber der Mitte der Linse 223 so versetzt, dass der kollimierte Strahl 20 unter einem Winkel von 3,7° gegen die Flächennormale der Wand 32 in das Innere des Misergehäuses 30 eintritt. Die azimutale Ausrichtung des Kollimators wird über Anschläge oder Justagemarken (hier nicht gezeichnet) so eingestellt, dass der Strahl 20 parallel zum Gehäuseboden 35 (vergleiche Figur 2) des Gehäuses 30 verläuft.

Der vormontierte Miserstapel 5 (Figur 2) läßt sich über eine Justagevorrichtung (hier nicht gezeichnet) in x, y und z-Richtung verschieben und um die z-Achse um einen Winkel Θ drehen. Die x-Achse verläuft hierbei parallel zum Referenzstrahl 20, die y-Achse senkrecht hierzu und parallel zum Gehäuseboden 35 und die Drehachse senkrecht auf dem Gehäuseboden. Der Miserstapel 5 wird durch geeignete Wahl der Dicken seiner Komponenten so aufgebaut, dass die Mitte der Miserstirnfläche 10 zumindest näherungsweise auf die Höhe des Referenzstrahls 20 fällt. Die z-Verstellung dient dann dazu, den Miserstapel in das Gehäuse einzuführen und um ihn während der Justage wenige Mikrometer anzuheben und so die Reibung während der Justagebewegungen zu vermeiden. Der Winkel Θ zwischen der Flächermormalen der Kristallstirnfläche 10 und dem Referenzstrahl 20 wird auf etwa 45° eingestellt und die Koordinate y wird so gewählt, dass der Referenzstrahl 20 die Kristallstirnfläche 10 etwa in der Mitte trifft.

In dieser Ausgangsposition für die Kristalljustage wird ein Teil des Referenzstrahls 20 an der Kristallstirnfläche 10 in den reflektierten Strahl R in Richtung nach Port P1 umgelenkt. Der andere Teil des Referenzstrahls 20 tritt in den Kristall ein und verläßt nach einem oder mehreren Umläufen als Teilstrahlen T1, T2, ... (Figur 4) den Kristall in Richtungen nahe der Richtung des reflektierten Strahls R. Die Strahlen R und T1, T2, ... werden hinter dem Port P1, der mit einer Blende 330 versehen ist, auf einem Schirm 40 aufgefangen. Anstelle des Schirms 40 kann auch der Empfangschip einer CCD-Kamera verwendet und die Lichtflecke R und T1, T2, ... auf einem Monitorbildschirm dargestellt werden.

Im noch nicht optimal justierten Fall wird sich ein Reflexbild wie in Fig. 6 dargestellt ergaben. Durch Verschieben des Kristalls in y-Richtung und durch Drehung in Θ-Richtung lassen sich die Reflexe T1, T2, ..., Tn auf dem Bildschirm mit dem Reflex R vereinigen, so dass nur noch ein gemeinsamer Reflex sichtbar ist. Durch Verschieben des Miserstapels in x-Richtung wird erreicht, dass alle Reflexe durch die Blende 330 treffen und somit die Bedingung der Kollinearität in der xy-Ebene erfüllt ist.

Nach der Justage wird der Miserstapel auf den Gehäuseboden abgesenkt und mit einem nach dem Stand der Technik bekannten Verfahren wie Kleben oder Löten fixiert. Da die Absenkung nur wenige Mikrometer beträgt wird dadurch keine nennenswerte Veränderung der Justage bewirkt. Gegenüber dem Justageverfahren nach dem Stand der Technik hat man hier einen planparallelen Montagespalt von geringer und definierter Breite, der eine stabile und verzugsarme Fixierung erlaubt.

Für eine Justage senkrechter Winkelfehler müßte der Miserkristall angehoben und/oder gekippt werden. Dies ist aber problematisch bei einer anschließenden Fixierung, da dann zwischen dem Miserstapel und dem Gehäuseboden ein Justagespalt von vorher nicht bekannter Dicke durch das Fixierungsmittel gefüllt werden müßte. Erfahrungsgemäß führt eine solche Vorgehensweise, die auch im oben zitierten Montagekonzept nach dem Stand der Technik verwendet wird, zu Stabilitätsproblemen infolge von nicht vorhersagbaren Temperaturausdehnungen und durch Kriechverhalten des Fixierungsmittels. Aus diesem Grund wird beim erfindungsgemäßen Montagekonzept eine Anhebung und Verkippung des Miserstapels 5 bis auf die oben erwähnte geringe Anhebung zur reibungsfreien Justagebewegung vermieden.

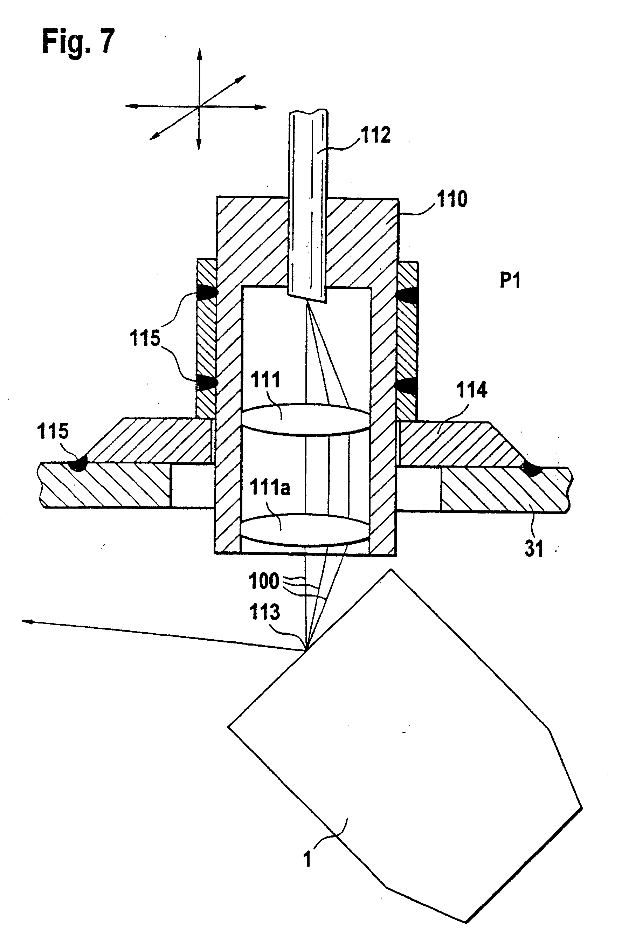

Beim Eingangsport P1 für das Pumplicht (siehe Fig. 7) sind die lateralen und axialen Toleranzen und die Winkeltoleranzen weniger kritisch als beim Ausgangsport. Hier wird ein Linsentubus 110 mit Linsen 111 und 111a verwendet, der zuvor an eine vielmodige Pumplichtfaser 112 vorjustiert und so angekoppelt wurde, dass in einem vorbestimmten Abstand und mit einer vorbestimmten Richtung von 3,7° gegenüber der Flächennormalen der Gehäuseseitenwand 31 die Strahltaille 113 des fokussierten Pumpstrahls 100 entsteht. Der Linsentubus kann dann montagegünstig in Richtung der Flächennormalen der Seitenwand 31 geführt und axial und lateral so justiert werden, dass der Miser 1 optimal angeregt wird.

Die Fixierung des Linsentubus mit der angekoppelten Pumpfaser erfolgt vorzugsweise, wie nach dem Stand der Technik bekannt, durch Laserschweißen (Laserschweißpunkte 115), wobei ein in axialer und lateraler Richtung verschiebbarer Flanschring 114 den Formschluß zwischen Linsentubus 110 und Gehäusewand 31 ermöglicht.

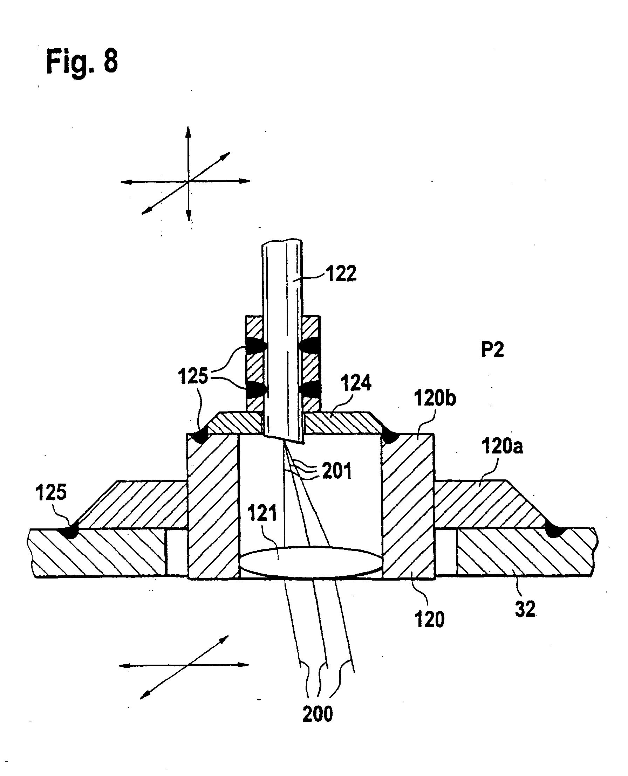

Die vertikale Winkeljustage der Strahlrichtung relativ zur polarisationserhaltenden einmodigen und in einer Faserferrule gefaßten Ausgangsfaser 122 (siehe Figur 8) erfolgt dadurch, dass eine Fokussierungslinse 121 im Ausgangsport P2 lateral zum Miseraustrittstrahl 200 justiert und auf diese Weise der fokussierte Strahl 201 in der optimalen Akzeptanzrichtung auf die Ausgangs faser 122 ausgerichtet wird. Nach der Justage wird die Linse 121 vorzugsweise durch Laserschweißen (Laserschweißpunkte 125) auf der Gehäusewand 32 fixiert. Die Linse ist hierfür in einer mit einem laserschweißbaren Flansch 120a versehenen Fassung 120 gehalten. Danach wird die in einer Faserferrule gefaßte Faser 122 axial und lateral zum Fokus des Misersausgangstrahls justiert und auf der Oberseite 120b der Linsenfassung 120 fixiert. Die Fixierung erfolgt wie im Port P1 vorzugsweise durch Laserschweißen (Laserschweißpunkte 125), wobei auch hier ein in axialer und lateraler Richtung verschiebbarer Flanschring 124 den Formschluß zwischen der Ferrule und der Oberseite der Linsenfassung ermöglicht.

## Patentansprüche

1. Montageverfahren zum Aufbau eines Miser-Lasers mit einem Miserkristall (1) in einem Miserstapel (5), der auf der Grundfläche eines Gehäuses angeordnet ist, das eine Seitenwand mit einem ersten Gehäusefenster (21) für den Miseraustrittstrahl aufweist, **gekennzeichnet durch** folgende Merkmale:
- von außen wird **durch** das erste Gehäusefenster (21), das für den Lichtaustritt vorgesehen ist, ein Referenzstrahl (20) auf die Lichtein- und Lichtaustrittsfläche an der Kristallstirnfläche (10) des Miserkristalls gerichtet, wobei dieser Referenzstrahl (20) ungefähr die gleiche Wellenlänge, die gleiche Lage und die gleiche räumliche Winkelausrichtung, jedoch mit umgekehrter Lichtstrahlrichtung hat, die der im Miserkristall zu erzeugende Miserstrahl später haben soll, und wobei der Referenzstrahl (20) so ausgerichtet wird, dass er parallel zur Grundfläche (35) des Gehäuses (30) verläuft und mit der Flächennormalen derjenigen Seitenfläche (32) einen Winkel von 3,7° einschließt, in der sich das erste Gehäusefenster (21) befindet,
- mit einer Justagevorrichtung, die voneinander unabhängige Bewegungen einerseits in Richtung parallel zum Referenzstrahl (20), andererseits senkrecht hierzu und parallel zum Gehäuseboden (35) erlaubt sowie Drehungen um eine senkrecht auf dem Gehäuseboden (35) stehende Drehachse ermöglicht, wird der vormontierte Miserstapel (5) so vorjustiert, dass der Winkel (Θ) zwischen der Flächennormalen der Kristallstirnfläche (10) und dem Referenzstrahl (20) etwa 45° beträgt und der Referenzstrahl (20) die Kristallstirnfläche (10) etwa in deren Mitte trifft,
- im noch nicht optimal justierten Fall werden **durch** Verschieben des Miserstapels (5) quer zur Richtung des Referenzstrahls (20) und **durch** Drehung alle Reflexe (T1, T2, ...) auf einem Bildschirm oder einem lichtempfindlichen Chip vereinigt, so dass nur noch ein gemeinsamer Reflex sichtbar ist,
- **durch** Verschieben des Miserstapels in Richtung des Referenzstrahls (20) wird erreicht, dass alle Reflexe **durch** eine Blende (330) treffen und somit die Bedingung der Rollinearität in einer Ebene parallel zur Grundfläche (35) des Gehäuses erfüllt ist.
- der Miserstapel (5) wird auf dem Gehäuseboden (35) fixiert.

2. Montageverfahren nach Anspruch 1, **dadurch gekennzeichnet, dass** in einem zweiten Gehäusefenster (P1) für das Pumplicht ein Linsentubus (110) verwendet wird, der zuvor an eine vielmodige Pumplichtfaser (112) vorjustiert und so angekoppelt wurde, dass in einem vorbestimmten Abstand und mit einer vorbestimmten Richtung von 3,7° gegenüber der Flächennormalen der das zweite Gehäusefenster aufweisenden Gehäuseseitenwand (31) die Strahltaille (113) des fokussierten Pumpstrahls (100) entsteht.

3. Montageverfahren nach Anspruch 2, **dadurch gekennzeichnet, dass** der Linsentubus (110) montagegünstig in Richtung der Flächennormalen der Gehäuseseitenwand (31) geführt und axial und lateral so justiert wird, dass der Miser (1) optimal angeregt wird.

4. Montageverfahren nach einem der vorangehenden Ansprüche, **dadurch gekennzeichnet, dass** die Fixierung des Linsentubus (110) mit der angekoppelten Pumpfaser (112) durch Laserschweißen erfolgt, wobei ein in axialer und lateraler Richtung verschiebbarer Flanschring (114) den Formschluß zwischen Linsentubus (110) und Gehäuseseitenwand (31) ermöglicht.

5. Montageverfahren nach einem der vorangehenden Ansprüche, **dadurch gekennzeichnet, dass** die vertikale Winkeljustage der Strahlrichtung relativ zur polarisationserhaltenden einmodigen und in einer Faserferrule gefaßten Ausgangsfaser (122) dadurch erfolgt, dass eine Fokussierungslinse (121) im ersten Gehäusefenster (P2) lateral zum Miseraustrittstrahl (200) justiert und auf diese Weise der fokussierte Strahl (201) in der optimalen Akzeptanzrichtung auf die Ausgangsfaser (122) ausgerichtet wird, wonach die Fokussierungslinse (121) auf der Gehäuseseitenwand (32) fixiert wird.

6. Montageverfahren nach Anspruch 5, **dadurch gekennzeichnet, dass** die Fokussierungslinse (121) in einer mit einem Flansch (120a) versehenen Fassung (120) gehalten wird und danach die in einer Faserferrule gefaßte Faser (122) axial und lateral zum Fokus des Misersausgangstrahls justiert und auf der Oberseite (120b) der Linsenfassung (120) fixiert wird.

## Claims

1. Method of mounting for the construction of a miser laser with a miser crystal (1) in a miser stack (5), which is arranged on the base of a housing which has a side wall with a first housing window (21) for the miser emergent beam,
**characterized in** the following features:
- from outside through the first housing window (21), which is provided for the light outlet, a reference beam (20) is directed to the light inlet and illuminating surface on the crystal face (10) of the miser crystal, whereby this reference beam (20) has approximately the same wavelength, the same position and the same spatial angular direction, but with the reversed light beam direction, which the miser beam to be generated in the miser crystal is to have later, and whereby the reference beam (20) is oriented in such a way that it runs parallel to the base (35) of the housing (30) and comprises an angle of 3.7° with the surface normals of that lateral face (32) in which the first housing window (21) is located,
- with an adjustment device which permits movements independently of each other on the one hand in the direction parallel to the reference beam (20), on the other hand perpendicular hereto and parallel to the housing floor (35), and which also enables rotations around a rotary axis standing perpendicular to the housing floor (35), the preassembled miser stack (5) is aligned in such a way that the angle (θ) between the surface normals of the crystal face (10) and the reference beam (20) is about 45° and the reference beam (20) meets the crystal face (10) at about its centre,
- in the not yet optimally adjusted case, the displacement of the miser stack (5) across the direction of the reference beam (20) and rotation cause all reflexes (T1, T2, ...) to be combined on a screen or light-sensitive chip so that only one common reflex is visible
- displacement of the miser stack in the direction of the reference beam (2) achieves the effect that all reflexes meet through a screen (330) and thus the condition of collinearity on a plane parallel to the base (35) of the housing is satisfied,
- the miser stack (5) is fixed in position on the housing floor (35).

2. Method of mounting according to claim 1, **characterised in that** in a second housing window (P1) for the pump light a lens tube (110) is used which was previously aligned at a multimodal pump light fibre (112) and coupled in such a way that the beam waist (113) of the focussed pump beam (100) arises at a predefined distance and with a predefined direction of 3.7° compared with the surface normals of the housing side wall (31) having the second housing window.

3. Method of mounting according to claim 2, **characterised in that** the lens tube (110) is led in the direction of the surface normals of the housing side wall (31) so as to favour mounting and is adjusted axially and laterally in such a way that the miser (1) is optimally excited.

4. Method of mounting according to one of the previous claims, **characterised in that** the fixing of the lens tube (110) with the coupled pump fibre (112) is effected through laser welding, whereby a flange ring (114) displaceable in the axial and lateral directions allows a positive fit between the lens tube (110) and the housing side wall (31).

5. Method of mounting according to one of the previous claims, **characterised in that** adjustment of the vertical angle of the beam direction is effected relative to the polarization-preserving single-mode output fibre (122), which is mounted in a fibre ferrule, such that a focusing lens (121) in the first housing window (P2) is adjusted laterally to the miser emergent beam (200) and in this way the focused beam (201) is oriented to the output fibre (122) in the optimal direction of acceptance, after which the focusing lens (121) is fixed in position on the housing side wall (32).

6. Method of mounting according to claim 5, **characterised in that** the focusing lens (121) is held in a mounting (120) having a flange (120a) and thereafter the fibre (122) mounted in a fibre ferrule is adjusted axially and laterally to the focus of the miser emergent beam and is fixed in position on the upper side (120b) of the lens mounting (120).

## Revendications

1. Procédé de montage pour l'installation d'un laser miser avec un cristal miser (1) dans une pile miser (5), qui est disposé sur la surface de base d'un boîtier, lequel présente une paroi latérale avec une première fenêtre de boîtier (21) pour le rayon de sortie miser,
**caractérisé par** les caractéristiques suivantes :
- un rayon de référence (20) est dirigé de l'extérieur, à travers la première fenêtre de boîtier (21), qui est prévue pour la sortie de lumière, sur la surface d'entrée et de sortie de lumière près de la surface avant de cristal (10) du cristal miser, moyennant quoi ce rayon de référence (20) a à peu près la même longueur d'onde, la même position et la même orientation angulaire dans l'espace, mais avec une orientation de rayon lumineux inversée, que le rayon miser à générer dans le cristal miser aura par la suite, et moyennant quoi le rayon de référence (20) est orienté de telle sorte qu'il est parallèle à la surface de base (35) du boîtier (30) et y forme un angle de 3,7° avec la perpendiculaire à la surface latérale (32), dans laquelle la première fenêtre de boîtier (21) se trouve.
- avec un dispositif d'ajustage qui permet des déplacements indépendants les uns des autres, d'une part dans le sens parallèle au rayon de référence (20) et d'autre part perpendiculairement à celui-ci, et parallèlement au fond du boîtier (35) et permet des rotations autour d'un axe de rotation perpendiculaire au fond du boîtier (35), la pile miser (5) prémontée est préajustée de façon que l'angle (θ) entre la perpendiculaire à la surface frontale du cristal (10) et le rayon de référence (20) soit d'environ 45° et le rayon de référence (20) touche la surface frontale du cristal (10) à peu près en son centre,
- dans un cas qui n'est pas encore ajusté de façon optimale, tous les reflets (T1, T2, ...) sont réunis sur un écran ou une puce photosensible par le déplacement de la pile miser (5) transversalement à la direction du rayon de référence (20) et par rotation, de sorte qu'on ne voit plus qu'un reflet commun,
- par le déplacement de la pile miser en direction du rayon de référence (20), on arrive à ce que tous les reflets arrivent par un cache (330) et que, de ce fait, la condition de la colinéarité dans un plan parallèle à la surface de base (35) du boîtier est satisfaite,
- la pile miser (5) est fixée sur le fond du boîtier (35).

2. Procédé de montage selon la revendication 1, **caractérisé en ce que** dans une seconde fenêtre de boîtier (P1) pour la lumière de pompage, on utilise un tube à lentilles (110) qui a été préadapté auparavant à une fibre de lumière de montage (112) multimodes et a été ainsi couplée de telle sorte que la taille (113) du rayon de pompage (100) focalisé se forme à une distance prédéfinie et avec une direction prédéfinie de 3,7° par rapport à la perpendiculaire de la paroi latérale de boîtier (31) présentant la deuxième fenêtre de boîtier.

3. Procédé de montage selon la revendication 2, **caractérisé en ce que** le tube à lentilles (110) est guidé de façon favorable pour le montage en direction de la perpendiculaire de la paroi latérale de boîtier (31) et ajustée sur un plan axial et latéral de telle façon que le miser (1) est excité de façon optimale.

4. Procédé de montage selon l'une quelconque des revendications précédentes, **caractérisé en ce que** la fixation du tube à lentilles (110) s'effectue avec la fibre de pompage (112) couplée par soudage au laser, moyennant quoi une bague à bride (114) pouvant être déplacée dans le sens axial et latéral permet la complémentarité de forme entre le tube à lentilles (110) et la paroi latérale du boîtier (31).

5. Procédé de montage selon l'une quelconque des revendications précédentes, **caractérisé en ce que** l'ajustage angulaire vertical de la direction du rayon par rapport à la fibre de sortie (122) monomode, gardant la polarisation et monté dans une férule à fibre, s'effectue par le fait qu'une lentille de focalisation (121) est ajustée dans la première fenêtre de boîtier (P2) latéralement par rapport au rayon de sortie miser (200) et que, de cette façon, le rayon (200) focalisé est orienté dans le sens d'admission optimal sur la fibre de sortie (122), après quoi la lentille de focalisation (121) est fixée sur la paroi latérale de boîtier (32).

6. Procédé de montage selon la revendication 5, **caractérisé en ce que** la lentille de focalisation (121) est maintenue dans une monture (120) pourvue d'une bride (120a) et la fibre (122) montée dans une férule de fibre est ensuite ajustée dans un plan axial et latéral par rapport au foyer du rayon de sortie miser et fixée sur la face supérieure (120b) de la monture de lentille (120).
